# EUROPÄISCHE PATENTANMELDUNG

(11) **EP 0 616 157 A1**
(43) Veröffentlichungstag der Anmeldung: **21.09.1994**
(21) Anmeldenummer: 93890241.8
(22) Anmeldetag: 14.12.1993
(51) Int. Cl.: F16K 27/00, F16L 39/00

(54) **Gehäuse für den Einbau eines Ventils, insbesondere eines Druckminderers und eines Filters, in eine Leitung**

(30) Priorität: 16.03.1993 AT 515/93
(71) Anmelder: BWT AKTIENGESELLSCHAFT, A-5310 Mondsee (AT)
(72) Erfinder: Binggl, Gerd, A-5310 Mondsee (AT)
(74) Vertreter: Atzwanger, Richard, Dipl.-Ing. Patentanwalt

(57) **Zusammenfassung**

Armatur für den Einbau eines Ventils (5) und eines Zusatzgerätes (8) in eine Leitung für flüssige oder gasförmige Medien, bestehend aus einem metallischen Gehäuse (1), welches mit koaxial ausgerichteten zwei Rohrstutzen zum Einbau der Armatur in die Leitung, weiters mit einem davon quer abragenden dritten Rohrstutzen (4) zur Befestigung des Ventils (5) und mit einem normal zu der durch die Achsen der drei Rohrstutzen definierten Ebene abragenden Anschlußflansch (7) zur lösbaren Befestigung des Zusatzgerätes (8) ausgebildet ist. Dabei ist im Anschlußflansch (7) ein Rohrstück (6) vorgesehen, welches an seinem dem Zusatzgerät (8) zugewandten Ende, das an das im Zusatzgerät (8) befindliche Innenrohr (81) anschließt, einen kreisförmigen Querschnitt aufweist sowie am gegenüberliegenden Ende einen angenähert halbkreisförmigen Querschnitt aufweist und welches in den Anschlußflansch (7) in zwei um 180° verdrehten Lagen einsetzbar ist, wobei das Innenrohr (81) des Zusatzgerätes (8) in der einen Lage des Rohrstückes (6) an den vom ersten Rohrstutzen (2) kommenden ersten Strömungskanal (22) und in dessen zweiter Lage an den über das Ventil (5) zum zweiten Rohrstutzen führenden Strömungskanal anschließbar ist.

## Beschreibung

Die gegenständliche Erfindung betrifft eine Armatur für den Einbau eines Ventils, insbesondere eines Druckminderventils, und eines Zusatzgerätes, z.B. eines Filtergerätes oder eines Dosiergerätes, in eine Leitung für flüssige oder gasförmige Medien, bestehend aus einem metallischen Gehäuse, welches mit koaxial ausgerichteten zwei Rohrstutzen zum Einbau der Armatur in die Leitung, weiters mit einem davon quer abragenden dritten Rohrstutzen zur Befestigung des Ventils, dessen Stößel in das mit einem Ventilsitz ausgebildete Gehäuse hineinragt, und mit einem normal zu der durch die Achsen der drei Rohrstutzen definierten Ebene abragenden Anschlußflansch zur lösbaren Befestigung des Zusatzgerätes ausgebildet ist, wobei die im Inneren des Gehäuses befindliche Wand mit Durchbrechungen ausgebildet ist, durch welche ein von einem ersten Rohrstutzen zum Zusatzgerät führender erster Strömungskanal und ein vom Zusatzgerät in das Ventil führender zweiter Strömungskanal gebildet sind.

Bei einer bekannten derartigen Armatur für den Einbau eines Ventils und eines Zusatzgerätes in eine Leitung besteht das Erfordernis, für unterschiedliche Einsatzzwecke des Zusatzgerätes in Abhängigkeit davon, ob die Strömung des Mediums, insbesondere einer Flüssigkeit, von dessen zentralen Kanal her durch den Geräteeinsatz hindurch in dessen Außenbereich oder in der umgekehrten Richtung erfolgen soll, zwei unterschiedliche Gehäuse zur Verfügung zu haben. Dies erfordert demnach die Erzeugung, den Vertrieb und die Lagerhaltung von zwei Gehäusen, die, obgleich sie grundsätzlich den gleichen Aufbau aufweisen, auf jeweils unterschiedlichen Seiten mit einem Anschlußflansch zur Befestigung des Zusatzgerätes ausgebildet sein müssen.

Der gegenständlichen Erfindung liegt demnach die Aufgabe zugrunde, eine Armatur für den Einbau eines Ventils und eines Zusatzgerätes zu schaffen, welche so ausgebildet ist, daß sie für beide Arten des Einsatzes des Zusatzgerätes verwendbar ist, um hierdurch eine Vereinfachung in der Herstellung, im Vertrieb und in der Lagerhaltung zu ermöglichen. Dies wird erfindungsgemäß dadurch erzielt, daß im Anschlußflansch ein Rohrstück vorgesehen ist, welches an seinem dem Zusatzgerät zugewandten Ende, das an das im Zusatzgerät befindliche Innenrohr anschließt, einen kreisförmigen Querschnitt aufweist und das am gegenüberliegenden Ende einen angenähert halbkreisförmigen Querschnitt aufweist und welches in den Anschlußflansch in zwei um 180° verdrehten Lagen einsetzbar ist, wobei das Innenrohr des Zusatzgerätes in der ersten Lage des Rohrstückes an den vom ersten Rohrstutzen kommenden ersten Strömungskanal und in dessen zweiter Lage an den über das Ventil zum zweiten Rohrstutzen führenden Strömungskanal anschließbar ist.

Vorzugsweise sind in der im Inneren des Gehäuses vorgesehenen Wand Bohrungen vorgesehen, in welche Bolzen einsetzbar sind, durch welche das Rohrstück in einer der beiden Lagen befestigbar ist. Nach einer bevorzugten Ausführungsform schließt die Achse des Ventils mit den Achsen der beiden Rohrstutzen einen Winkel von 30° bis 60°, insbesondere einen Winkel von 45°, ein, und schließt die im Inneren des Gehäuses befindliche Wand, welche angenähert hohlzylindrisch ausgebildet ist, mit den Achsen der Rohrstutzen den gleichen Winkel ein. Weiters ist vorzugsweise der Anschlußflansch als quadrisches Gehäuse mit einer angenähert kreisrunden Anschlußöffnung ausgebildet.

Der Gegenstand der Erfindung ist nachstehend anhand eines in der Zeichnung dargestellten Ausführungsbeispiels näher erläutert. Es zeigen:
- Fig. 1: eine erfindungsgemäße Armatur, in axonometrischer Darstellung,
- Fig. 2: diese Armatur gemäß Fig. 1, in Seitenansicht,
- Fig. 3: diese Armatur in einem durch das Ventil geführten Schnitt,
- Fig. 4: die Darstellung gemäß Fig. 2, wobei jedoch ein Einsatzteil weggelassen ist,
- Fig. 5: einen Schnitt nach der Linie A-A der Fig. 2,
- Fig. 6: den Einsatzteil, in axonometrischer Darstellung, und die
- Fig. 7a und 7b: eine Teilansicht dieser Armatur, teilweise geschnitten.

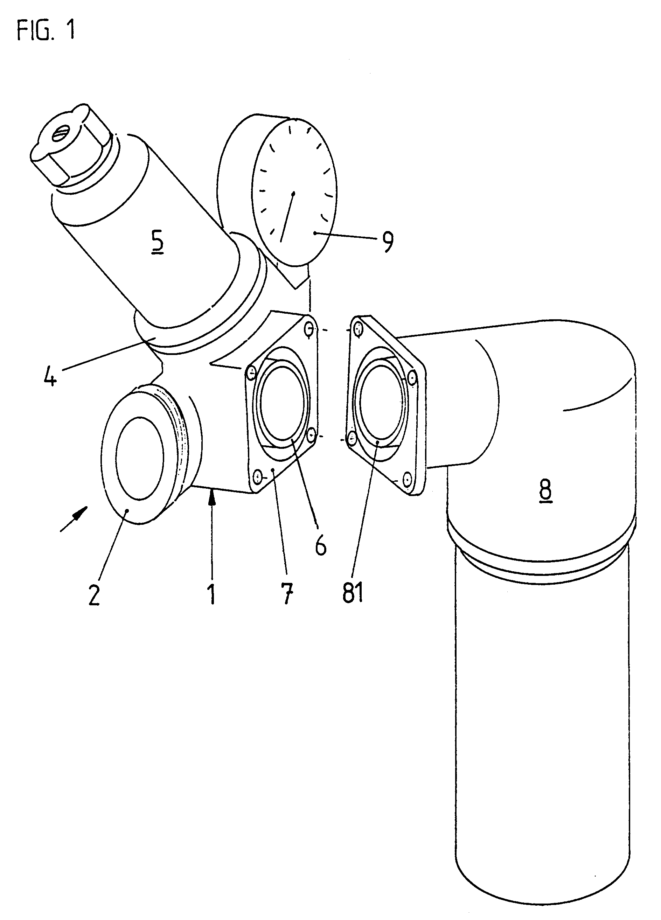

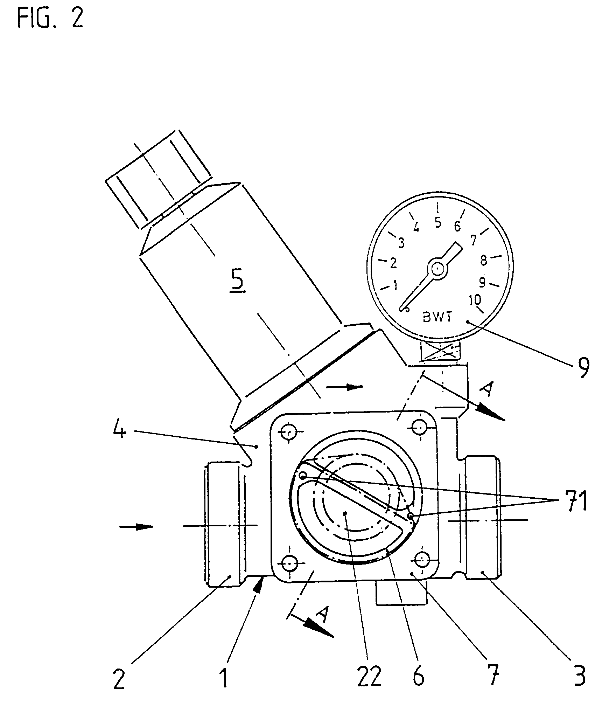

Wie dies aus den Fig. 1 und 2 ersichtlich ist, besteht eine erfindungsgemäße Armatur aus einem Gehäuse 1, welches mit einem ersten Rohrstutzen 2 und einem zweiten Rohrstutzen 3 ausgebildet ist, wodurch diese Armatur in eine Leitung für ein flüssiges oder gasförmiges Medium eingebaut werden kann. Quer nach oben ragt vom Gehäuse 1 ein dritter Rohrstutzen 4 ab, welcher zur Befestigung eines Ventils, z.B. eines Druckminderventils 5, dient. Weiters ragt vom Gehäuse 1 ein Druckmeßgerät 9 ab.

Quer zu derjenigen Ebene, welche durch die Achsen der Rohrstutzen 2, 3 und 4 gebildet ist, ist das Gehäuse 1 weiters mit einem Anschlußflansch 7 ausgebildet, welcher zum Anschluß eines Zusatzgerätes, z.B. eines Wasserfilters 8, dient. In diesem Anschlußflansch 7 ist ein Rohrstück 6 eingesetzt, dessen Ausbildung und Funktion nachstehend erläutert sind.

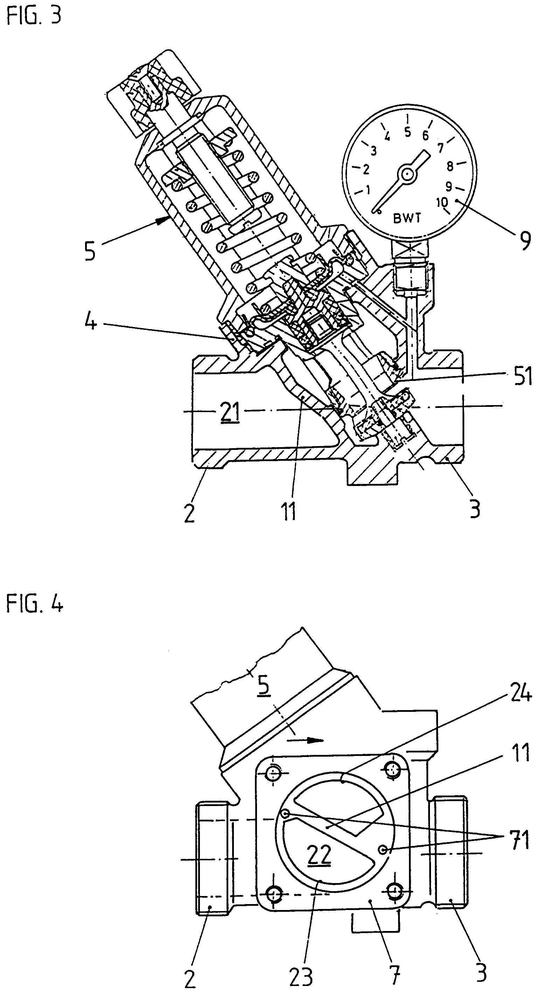

Aus Fig. 3 ist die Ausbildung des Druckminderventils ersichtlich. Da dieses jedoch nicht Gegenstand der vorliegenden Erfindung ist, ist es nicht weiter erläutert.

Wie dies weiters aus den Fig. 3 bis 5 ersichtlich ist, ist die im Inneren des Gehäuses 1 befindliche Wand 11 so ausgebildet, daß der durch den ersten Rohrstutzen 2 gebildete Kanal 21 in einen Kanal 22 übergeht, welcher zum Anschlußflansch 7 hin führt.

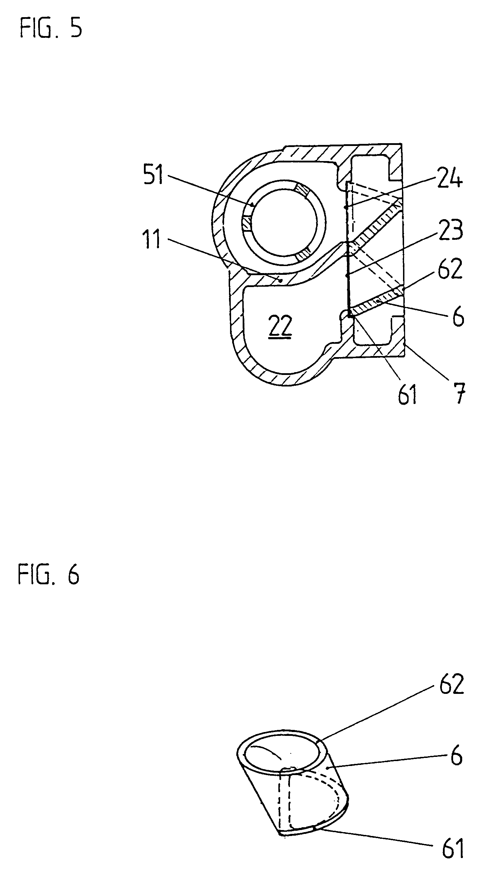

Das innerhalb des Anschlußflansches 7 angeordnete Rohrstück 6 ist, wie dies aus Fig. 6 ersichtlich ist, an seinem einen Ende 61 angenähert halbkreisförmig ausgebildet, wogegen es an seinem anderen Ende 62 angenähert kreisförmig ausgebildet ist. Dieses Rohrstück 6 ist in den Anschlußflansch 7 einerseits in derjenigen Lage einsetzbar, welche in Fig. 2 und in Fig. 5 in ausgezogenen Linien dargestellt ist, wobei dessen Ende 61, welches einen halbkreisförmigen Querschnitt aufweist, an den Kanal 22, dessen Durchtrittsöffnung 23 im Gehäuse 1 gleichfalls halbkreisförmig ausgebildet ist, anschließt.
Durch Verdrehung des Rohrstückes 6 um 180° wird es andrerseits in diejenige Lage verstellt, welche in Fig. 5 strichliert dargestellt ist, wobei dessen Ende 61 an den gleichfalls im Querschnitt halbkreisförmigen Durchbruch 24, welcher zum Ventilsitz 51 führt, anschließt. Das andere Ende 62 des Rohrstückes 6 schließt unabhängig von seiner Lage an das Innenrohr 81 des Zusatzgerätes 8 an.

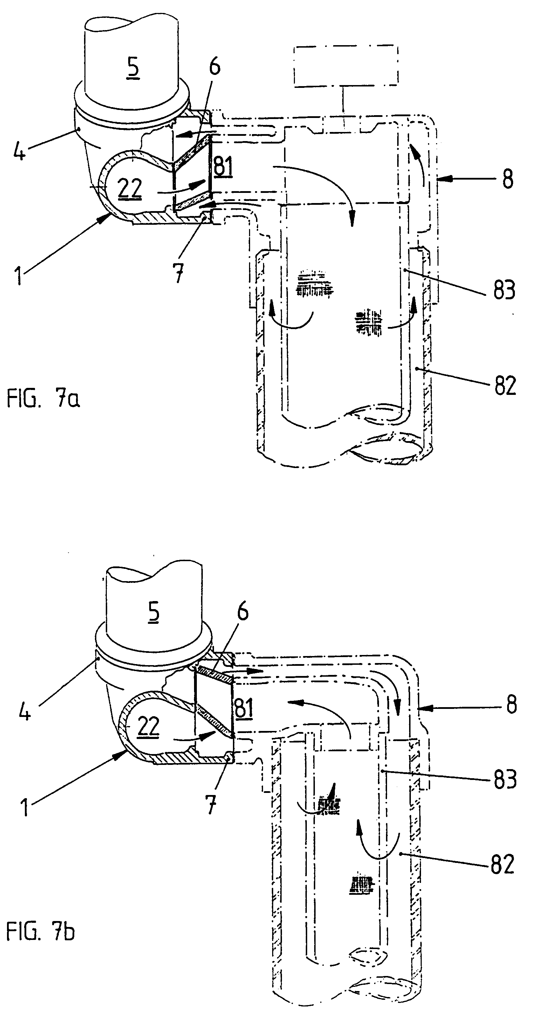

Die beiden Drehlagen des Rohrstückes 6 sind weiters auch aus den Fig. 7a und 7b ersichtlich.
Wie dies in Fig. 7a dargestellt ist, befindet sich das Rohrstück 6 dabei in derjenigen Lage, in welcher die Strömung durch den ersten Rohrstutzen 2, die Kanäle 21 und 22, den Durchbruch 23 und das Rohrstück 6 hindurch in das Innenrohr 81 des Zusatzgerätes 8 erfolgt, worauf es den Einsatz 83 durchsetzt und der Rückfluß im äußeren Kanal 82 sowie außerhalb des Rohrstückes 6 durch den Durchbruch 24 zum Sitz 51 des Druckminderventils 5 hin erfolgt.
Soferne hingegen das Rohrstück 6 um 180° in diejenige Lage verstellt wird, welche in Fig. 7b der Zeichnung dargestellt ist, erfolgt die Strömung der Flüssigkeit vom ersten Rohrstutzen 2 durch die Kanäle 21 und 22 und den Durchbruch 23 hindurch in den äußeren Kanal 82 des Zusatzgerätes 8, weiters durch den Einsatz 83 hindurch und erfolgt der Rückfluß durch das Innenrohr 81 des Zusatzgerätes 8 und das Rohrstück 6 sowie durch den Durchbruch 24 hindurch zum Sitz 51 des Druckminderventils 5. Die Befestigung des Rohrstückes 6 erfolgt mittels Stiften, welche in Bohrungen 71, die sich in der Wand 11 befinden, eingesetzt werden.

Hierdurch ist eine Armatur geschaffen, bei welcher durch Verstellung eines einzigen Teiles, nämlich des Rohrstückes 6, zwei unterschiedliche Anwendungen, nämlich die Anströmung eines Zusatzgerätes vom Innenrohr her bzw. vom Außenrohr her, ermöglicht wird. Dadurch wird eine wesentliche Vereinfachung in der Erzeugung, im Vertrieb und in der Lagerhaltung einer darartigen Armatur erzielt.

## Patentansprüche

1. Armatur für den Einbau eines Ventils, insbesondere eines Druckminderventils, und eines Zusatzgerätes, z.B. eines Filtergerätes oder eines Dosiergerätes, in eine Leitung für flüssige oder gasförmige Medien, bestehend aus einem metallischen Gehäuse, welches mit koaxial ausgerichteten zwei Rohrstutzen zum Einbau der Armatur in die Leitung, weiters mit einem davon quer abragenden dritten Rohrstutzen zur Befestigung des Ventils, dessen Stößel in das mit einem Ventilsitz ausgebildete Gehäuse hineinragt, und mit einem normal zu der durch die Achsen der drei Rohrstutzen definierten Ebene abragenden Anschlußflansch zur lösbaren Befestigung des Zusatzgerätes ausgebildet ist, wobei die im Inneren des Gehäuses befindliche Wand mit Durchbrechungen ausgebildet sind, durch welche ein von einem der beiden ersten Rohrstutzen in das Zusatzgerät führender erster Strömungskanal und ein vom Zusatzgerät in das Ventil führender zweiter Strömungskanal gebildet sind, dadurch gekennzeichnet, daß im Anschlußflansch (7) ein Rohrstück (6) vorgesehen ist, welches an seinem dem Zusatzgerät (8) zugewandten Ende (62), das an das im Zusatzgerät (8) befindliche Innenrohr (81) anschließt, einen kreisförmigen Querschnitt aufweist sowie am gegenüberliegenden Ende (61) einen angenähert halbkreisförmigen Querschnitt aufweist und welches in den Anschlußflansch (7) in zwei um 180° verdrehten Lagen einsetzbar ist, wobei das Innenrohr (81) des Zusatzgerätes (8) in der einen Lage des Rohrstückes (6) an den vom ersten Rohrstutzen (2) kommenden ersten Strömungskanal (22) und in dessen zweiter Lage an den über das Ventil (5) zum zweiten Rohrstutzen (3) führenden Strömungskanal anschließbar ist.

2. Armatur nach Patentanspruch 1, dadurch gekennzeichnet, daß in der im Inneren des Gehäuses (1) vorgesehenen Wand (11) Bohrungen (71) vorgesehen sind, in welche Bolzen einsetzbar sind, durch welche das Rohrstück (6) in einer der beiden Lagen befestigbar ist.

3. Armatur nach einem der Patentansprüche 1 und 2, dadurch gekennzeichnet, daß die Achse des Ventils (5) mit den Achsen der beiden Rohrstutzen (2, 3) einen Winkel von 30° bis 60°, insbesondere einen Winkel von 45°, einschließt und daß die im Inneren des Gehäuses (1) befindliche Wand (11), welche angenähert hohlzylindrisch ausgebildet ist, mit den Achsen der Rohrstutzen (2, 3) den gleichen Winkel einschließt.

4. Armatur nach einem der Patentansprüche 1 bis 3, dadurch gekennzeichnet, daß der Anschlußflansch (7) als quadrisches Gehäuse mit einer angenähert kreisrunden Anschlußöffnung ausgebildet ist.
